# EUROPÄISCHE PATENTSCHRIFT

(11) **EP 2 789 772 B1**
(45) Veröffentlichungstag und Bekanntmachung des Hinweises auf die Patenterteilung: **15.06.2016**
(21) Anmeldenummer: 13162893.5
(22) Anmeldetag: 09.04.2013
(51) Int. Cl.: E04G 21/32

(54) **Halterung für einen Führungsschuh eines Klettersystems für Betonschalungen**
Holder for a guide sleeve of a climbing system for concrete formwork
Support pour un sabot de guidage d'un système de grimpant pour des coffrages en béton

(43) Veröffentlichungstag der Anmeldung: 15.10.2014
(73) Patentinhaber: MEVA Schalungs-Systeme GmbH, 72221 Haiterbach (DE)
(72) Erfinder:
(74) Vertreter: Späth, Dieter

(56) Entgegenhaltungen:
- EP-A1- 2 365 159
- EP-A1- 2 503 077
- SG-A1- 177 682

## Beschreibung

Die Erfindung betrifft eine Halterung für einen Führungsschuh eines Klettersystems für Betonschalungen mit den Merkmalen des Oberbegriffs des Anspruchs 1. Das Klettersystem kann beispielsweise eine Kletterschalung und/oder eine Arbeitsbühne aufweisen. Die Raumrichtungen "vertikal" und "horizontal" beziehen sich auf eine Gebrauchslage des Führungsschuhs und des Klettersystems.

Üblicherweise weisen Klettersysteme für Betonschalungen zwei oder mehr vertikale, zueinander parallele, in einer Ebene und mit Abstand nebeneinander angeordnete Führungsschienen auf. Die Führungsschienen sind beispielsweise Doppel-T-Träger. Der Führungsschuh umgreift die Führungsschiene so, dass sie horizontal in allen Richtungen gehalten und vertikal verschiebbar geführt ist. Üblich ist es, zwei bis drei Führungsschuhe pro Führungsschiene vertikal übereinander beispielsweise an bereits hergestellten Geschossdecken eines Bauwerks zu befestigen. Ist die Führungsschiene ein Doppel-T-Träger, umgreift der Führungsschuhe zumeist einen ihm zugewandten Flansch des Doppel-T-Trägers.

Zur Befestigung eines Führungsschuhs eines Klettersystems für Betonschalungen auf beispielsweise einer bereits erstellten Geschossdecke eines Bauwerks offenbart die europäische Patentanmeldung EP 2 412 894 A2 eine zweiteilige, teleskopierbare Halterung mit einer Schiene, die auf der Geschossdecke festlegbar ist, und mit einem Tragarm, der an der Schiene verschiebbar geführt ist. Die Schiene wird nahe an und senkrecht zu einem Rand der Geschossdecke festgelegt, beispielsweise mit Dübeln verankert. Anschließend wird der Tragarm von einer dem Rand der Geschossdecke fernen Rückseite an der Schiene eingeführt und lässt sich über den Rand der Geschossdecke vorstehend, d. h. auskragend, an der Schiene verschieben. An seinem vorderen, auskragenden Ende ist der Führungsschuh für das Klettersystem angeordnet. Die Festlegung der bekannten Halterung erfolgt auf der Geschossdecke, es ist weder eine Arbeitsbühne nötig, um am Rand der Geschossdecke zu arbeiten, noch muss sich jemand über den Rand der Geschossdecke beugen, wodurch eine Unfallgefahr verringert ist.

Eine weitere, ebenfalls teleskopierbare Halterung für einen Führungsschuh eines Klettersystems für Betonschalunge gemäß dem Oberbegriff des Anspruchs 1 offenbart die europäische Patentanmeldung EP 2 503 077 A1. Diese Halterung weist ebenfalls eine Schiene auf, die auf einer bereits fertiggestellten Geschossdecke eines Bauwerks festlegbar ist, und einen an der Schiene verschiebbar geführten Tragarm auf, der über einen Rand der Geschossdecke vorstehend, d. h. auskragend, an der Schiene verschiebbar geführt ist. Am auskragenden Ende weist der Tragarm einen Führungsschuh für das Klettersystem auf. Zur Verschiebung des Tragarms weist die bekannte Halterung ein Zahnstangengetriebe mit einer Zahnstange auf der Schiene und einem mit der Zahnstange kämmenden, im Tragarm drehbar gelagerten Zahnrad auf, das an einem Sechskant drehend antreibbar ist, der drehfest mit dem Zahnrad ist und seitlich aus dem Tragarm vorsteht.

Die Patentanmeldung SG 177 682 A1 offenbart ein Klettersystem für Betonschalungen mit Führungsschuhen zu einem vertikal verschieblichen Führen der Betonschalung und einer Halterung für die Führungsschuhe. Die Halterung weist einen Niederhalter, der auf einer Geschossdecke festlegbar ist, und ein Schiebeteil, das im Niederhalter parallel zur Geschossdecke verschiebbar geführt ist, auf. Der Niederhalter ist eine U-förmige Schiene, die in einer vorgesehenen Gebrauchslage oben offen ist. In diese Schiene ist das Schiebeteil von vorn einschiebbar, wobei es Hinterschneidungen des Niederhalters hintergreift, so dass das Schiebeteil nicht nach oben vom Niederhalter abhebbar ist. Zwei Bolzen, die quer durch das Schiebeteil und den Niederhalter gesteckt sind und die fluchtende Löcher im Schiebeteil und Langlöcher im Niederhalter durchgreifen, sichern das Schiebeteil in Längsrichtung verschiebbar am Niederhalter. Zum Verschieben des Schiebeteils weist die Halterung des Führungsschuhs des bekannten Klettersystems einen Spindeltrieb auf, der am Schiebeteil drehbar und axialfest festgelegt ist.

Aufgabe der Erfindung ist eine Halterung für einen Führungsschuh eines Klettersystems für Betonschalungen der vorstehend erläuterten Art mit einer Hemmung gegen unbeabsichtigtes Verschieben vorzuschlagen.

Diese Aufgabe wird erfindungsgemäß durch die Merkmale des Anspruchs 1 gelöst. Die erfindungsgemäße Halterung weist einen Niederhalter und ein Schiebeteil auf. Der Niederhalter tritt in seiner Funktion an die Stelle der Schienen der bekannten Halterungen, er kann bei Ausführungsformen der Erfindung als Schiene ausgebildet sein. Der Niederhalter ist beispielsweise auf einer bereits hergestellten Geschossdecke festlegbar. Beispielsweise wird der Niederhalter mit Dübeln auf der Geschossdecke befestigt oder er wird mit in die Geschossdecke einbetonierten Ankern verschraubt. Am Niederhalter ist das Schiebeteil, das ein Tragarm sein kann, verschiebbar geführt und gegen Abheben von der Geschossdecke gehalten. Das Schiebeteil ist parallel zur Geschossdecke, d. h. horizontal verschiebbar geführt. Es lässt sich über einen Rand der Geschossdecke vorstehend, d. h. auskragend verschieben, das Schiebeteil kann auch als teleskopierbar aufgefasst werden. Am auskragenden Ende des Schiebeteils ist ein Führungsschuh für das Klettersystem vorgesehen.

Des Weiteren weist die erfindungsgemäße Halterung einen Antrieb auf, mit dem das Schiebeteil gegenüber dem Niederhalter verschiebbar ist. Erfindungsgemäß ist der Antrieb selbsthemmend, wodurch das Schiebeteil automatisch gegen eine unbeabsichtigte Verschiebung gesichert ist.

Der Niederhalter und das Schiebeteil der erfindungsgemäßen Halterung sind werkzeuglos zusammensetzbar und voneinander lösbar, und zwar auch dann, wenn der Niederhalter auf beispielsweise einer Geschossdecke befestigt ist. Das ermöglicht eine Festlegung des Niederhalters auf beispielsweise einer Geschossdecke ohne das Schiebeteil, was den Vorteil hat, dass der Niederhalter leichter handhabbar ist, weil er ohne das Schiebeteil kleiner und leichter ist, und dass das Schiebeteil beispielsweise bei einem Bohren in die Geschossdecke oder einem Festschrauben des Niederhalters auf der Geschossdecke nicht im Weg ist. Mit dem Zusammensetzen des Schiebeteils und des Niederhalters wird auch der Antrieb in seine Funktionsstellung verbracht, beispielsweise ein Getriebe zusammengesetzt oder Teile des Antriebs in Eingriff oder Wirkverbindung miteinander gebracht, so dass der Antrieb funktionsfähig ist, wenn das Schiebeteil und der Niederhalter zusammengesetzt sind, ohne dass es eines weiteren Handgriffs außer dem Zusammensetzen des Schiebeteils und des Niederhalters bedarf.

Ein Vorteil der Erfindung ist, dass keine Sicherung gegen Verschieben des Schiebeteils zum Verschieben des Schiebeteils gelöst werden muss und dass nach einem Verschieben nicht vergessen werden kann das Schiebeteil gegen Verschieben zu sichern. Ein weiterer Vorteil der Erfindung ist die Möglichkeit des werkzeuglosen Zusammensetzens und Lösens des Niederhalters und des Schiebeteils, die eine Handhabung der Halterung, insbesondere eine Festlegung auf einer Geschossdecke, erleichtern.

Vorzugsweise weist der Antrieb ein selbsthemmendes Getriebe, insbesondere ein selbsthemmendes Rotations-/Translations-Umsetzungsgetriebe auf. Beispiel für ein selbsthemmendes Rotations-/Translations-Umsetzungsgetriebe ist ein Gewindetrieb, wobei anstelle einer Spindel ein Dywidag-Stab Verwendung finden kann. Ein anderes selbsthemmendes Getriebe ist beispielsweise ein Schneckengetriebe. Ein selbsthemmendes Getriebe als Antrieb zur Verschiebung des Schiebeteils der erfindungsgemäßen Halterung bewirkt selbsttätig die gewünschte Hemmung des Schiebeteils gegen unbeabsichtigte Verschiebung und ermöglicht die Verschiebung des Schiebeteils durch einen Drehantrieb mit einem muskelkraftbetätigten Handwerkzeug, beispielsweise einer Ratsche, oder einem Fremdenergiewerkzeug wie beispielsweise einem Elektro- oder DruckluftSchrauber.

Eine Weiterbildung der Erfindung sieht eine lösbare Lösesicherung vor, die das Schiebeteil gegen Lösen vom Niederhalter sichert. Die Lösesicherung vermeidet ein unbeabsichtigtes Lösen des Schiebeteils vom Niederhalter und sichert das Schiebeteil gegen Abheben von beispielsweise der Geschossdecke, auf der der Niederhalter festgelegt ist.

Eine Ausgestaltung der Erfindung sieht ein Auflager für eine Absturzsperre des Klettersystems am Schiebeteil vor. Solche Absturzsperren sind beispielsweise Klinken oder Sperrklinken, die verhindern, dass das Klettersystem im Führungsschuh nach unten rutscht. Beispielsweise durch Öffnen des Führungsschuhs kann das Auflager außer Funktion setzbar sein. Das ermöglicht ein Einführen des Klettersystems in übereinander angeordnete Führungsschuhe von oben. Ist der Führungsschuh geschlossen, ist die Absturzsperre wirksam, es kann nicht vergessen werden, sie in Funktion zu setzen.

Eine Ausgestaltung der Erfindung sieht einen Führungsschuh mit Führungsbacken am Schiebeteil vor. Zwischen den Führungsbacken des Führungsschuhs sind vertikale Führungsschienen eines Klettersystems für Betonschalungen vertikal verschieblich geführt. Die Führungsbacken lassen sich voneinander entfernen um die Führungsschiene in den Führungsschuh einzuführen.

Bei einer Weiterbildung ist das bereits erläuterte Auflager für die Absturzsperre des Klettersystems am Schiebeteil vorhanden und wird durch das Entfernen der Führungsbacken des Führungsschuhs voneinander außer Funktion gesetzt, so dass die vertikale Führungsschiene des Klettersystems von oben zwischen die Führungsbacken des Führungsschuhs einführbar ist.

Die Erfindung wird nachfolgend anhand eines in der Zeichnung dargestellten Ausführungsbeispiels näher erläutert. Es zeigen:
- Figur 1: einen Längsmittelschnitt einer erfindungsgemäßen Halterung;
- Figur 2: ein Klettersystem für Betonschalungen, die mit Halterungen aus Figur 1 an Geschossdecken befestigt ist; und
- Figur 3: einen Längsmittelschnitt eines zweiten Ausführungsbeispiels einer erfindungsgemäßen Halterung.

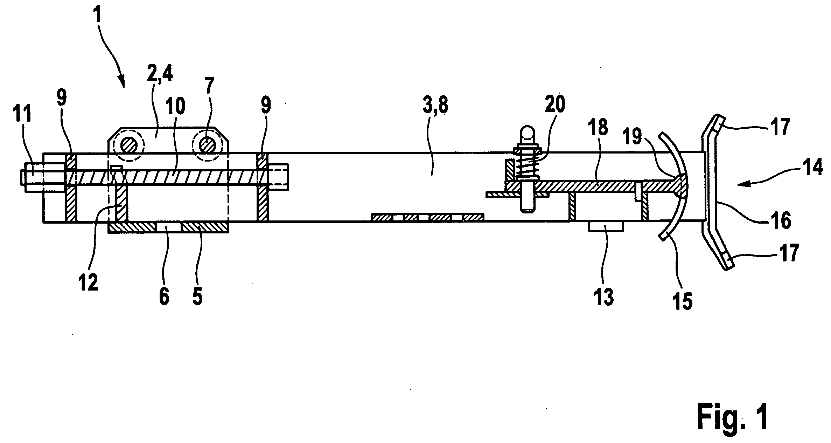

Die in Figur 1 dargestellte, erfindungsgemäße Halterung 1 dient zur Befestigung und vertikal verschieblichen Führung eines Klettersystems für Betonschalungen, beispielsweise für eine Kletterschalung und/oder eine Arbeitsbühne. Die Halterung 1 weist einen Niederhalter 2 und ein Schiebeteil 3 auf, das auch als Tragarm aufgefasst werden kann. Der Niederhalter 2 ist in Stirnansicht U-förmig, er weist zwei parallele Seitenwände 4 auf, die durch eine Bodenplatte 5 verbunden sind. Die Bodenplatte 5 weist ein Loch 6 zur Festlegung auf einer nicht dargestellten Geschossdecke mit beispielsweise einer Schraube, die in einen einbetonierten Anker geschraubt wird, auf. Nahe eines oberen, d. h. der Bodenplatte 5 fernen Randes weisen die Seitenwände 4 zwei Löcher auf, durch die Stifte 7 gesteckt sind. Im Ausführungsbeispiel sind die Stifte 7 Zylinderstifte mit Kopf und Querlöchern an den Köpfen gegenüberliegenden Enden, durch die sie mit nicht dargestellten Splinten gegen Herausziehen aus den Löchern in den Seitenwänden 4 des Niederhalters 2 gesichert sind.

Das Schiebeteil 3 ist ein Tragarm, der zwei zueinander parallele und mit Abstand voneinander angeordnete C-Profilträger 8 aufweist, die stellenweise durch Querstege 9 und dgl. miteinander verbunden sind. Die C-Profilträger 8 befinden sich zwischen den Seitenwänden 4 des Niederhalters 2 und liegen auf dem Boden 5 des Niederhalters 2 auf. Das Schiebeteil 3 ist auf diese Weise verschiebbar im Niederhalter 2 geführt. Die Stifte 7 in den Löchern in den Seitenwänden 4 des Niederhalters 2 übergreifen das Schiebeteil 3 und sichern das Schiebeteil 3 im Niederhalter 2 gegen herausnehmen nach oben. Nach Herausziehen der Stifte 7 aus den Seitenwänden 4 des Niederhalters 2 lässt sich das Schiebeteil 3 nach oben aus dem Niederhalter 2 herausnehmen, d. h. vom Niederhalter 2 lösen. Die Stifte 7 bilden eine lösbare Lösesicherung gegen unbeabsichtigtes Lösen des Schiebeteils 3 vom Niederhalter 2. Durch einfaches Einsetzen des Schiebeteils 3 von oben in den U-förmigen Niederhalter 2 lassen sich das Schiebeteil 3 und der Niederhalter 2 zusammensetzen. Danach werden die Stifte 7 zur Sicherung des Schiebeteils 3 im Niederhalter 2 durch die Löcher in den Seitenwänden 4 des Niederhalters 2 gesteckt und mit den nicht dargestellten Splinten gesichert. Das Schiebeteil 3 und der Niederhalter 2 sind werkzeuglos mit einem einzigen Handgriff zusammensetzbar und werden wie beschrieben mit den Stiften 7, ebenfalls werkzeuglos, gesichert.

Das Schiebeteil 3 weist zwei Querstege 9 auf, die die C-Profilträger 8 verbinden und die sich vor und hinter dem Niederhalter 2 befinden, wenn das Schiebteil 3 in vorgesehener Weise mit dem Niederhalter 2 zusammengesetzt ist. In Löchern in den Querstegen 9 ist eine Spindel 10 drehbar gelagert und axial gehalten. Die Spindel 10 verläuft in einer Längsrichtung des Schiebeteils 3, d. h. in einer Verschieberichtung des Schiebeteils 3 im Niederhalter 2. Die Spindel 10 weist einen Sechskant 11 zu ihrem Drehantrieb an einem hinteren Ende der Spindel 10 und des Schiebeteils 3 auf. In Figur 1 ist die Spindel 10 ein Dywidag-Stab, es sind allerdings auch andere bzw. herkömmliche Spindeln möglich.

Der Niederhalter 2 weist einen Quersteg 12 mit einem oben offenen Schlitz auf, der von der Spindel 10 durchsetzt wird. Der Quersteg 12 ist nicht eben sondern so gebogen, dass die beiden Seiten des Schlitzes um die Hälfte einer Steigung eines Gewindes der Spindel 10 versetzt sind. Der Schlitz im Quersteg 12 bildet eine Art Mutter für die Spindel 10 des Schiebeteils 3. Durch einen Drehantrieb der Spindel 10 an ihrem Sechskant 11 wird das Schiebeteil 3 im Niederhalter 2 verschoben. Bei Verwendung eines Dywidag-Stabs als Spindel 10 greifen die um die halbe Steigung versetzten Ränder des Schlitzes im Quersteg 12 zwischen sickenförmige Gewindesegmente des Dywidag-Stabs. Die nach Art einer Spindel in einer Mutter in den Schlitz im Quersteg 12 des Niederhalters 2 eingreifende Spindel 10 des Schiebeteils 3 bildet zusammen mit dem Quersteg 12 bzw. dessen Schlitz einen Gewindetrieb, d. h. ein Rotations-/Translations-Umsetzungsgetriebe, d. h. einen Antrieb, mit dem das Schiebeteil 3 im Niederhalter 2 verschiebbar ist. Das Getriebe ist selbsthemmend, es hemmt das Schiebeteil 3 gegen eine Verschiebung im Niederhalter 2 ohne Drehen der Spindel 10. Wird das Schiebeteil 3 zum Zusammensetzen von oben in den Niederhalter 2 eingesetzt, gelangt die Spindel 10 in den Schlitz im Quersteg 12, d. h. der Antrieb des Schiebeteils 3 gelangt von selbst in seine Funktionsstellung, wenn das Schiebeteil 3 und der Niederhalter 2 zusammengesetzt werden.

Mit Abstand von einem vorderen Ende weist das Schiebeteil 3 einen Quersteg auf, der die beiden C-Profilträger 8 an der Unterseite verbindet. Der Quersteg befindet sich in einer Ebene mit dem Boden 5 des Niederhalters 2 und bildet ein Gleitlager 13, das auf der nicht dargestellten Geschossdecke verschiebbar ist und das Schiebeteil 3 auf der Geschossdecke abstützt.

Am vorderen Ende weist das Schiebeteil 3 einen Führungsschuh 14 für das in Figur 1 nicht gezeigte Klettersystem auf. Der Führungsschuh 14 weist zwei Führungsbackenpaare mit je einer äußeren und einer inneren Führungsbacke 15, 16 auf. Die inneren Führungsbacken 15 sind konvex kreisbogenförmig gewölbt, die äußeren Führungsbacken 16 weisen oben und unten Schrägen 17 auf. Eine zwischen den Führungsbacken 15, 16 des Führungsschuhs 14 geführte Führungsschiene des Klettersystems ist zwischen den Führungsbacken 15, 16 um eine gedachte horizontale, quer zum Schiebeteil 3 verlaufende Achse schwenkbar.

Die inneren Führungsbacken 15 sind an einem Schieber 18 angebracht, der in Längsrichtung des Schiebeteils 3 im Schiebeteil 3 verschiebbar ist, so dass sich die inneren Führungsbacken 15 von den äußeren Führungsbacken 16 entfernen lassen. Der Schieber 18 ist mit einem Federstift 20 gegen Verschieben gesichert. Zwischen den inneren Führungsbacken 15 weist der Schieber 18 ein Auflager 19 für eine nicht gezeichnete Sperrklinke des Klettersystems auf. Die Sperrklinke und das Auflager 19 bilden eine Absturzsperre, die ein Durchrutschen des Klettersystems durch den Führungsschuh 14 nach unten verhindert. Das Auflager 19 ist zylindrisch, so dass die nicht gezeichnete Sperrklinke des Klettersystems auch bei einem Schwenken der Führungsschiene des Klettersystems im Führungsschuh 14 immer in gleicher Weise auf dem Auflager 19 aufliegt.

Zur Verwendung der Halterung 1 werden die Stifte 7 aus dem Niederhalter 2 entfernt und das Schiebeteil 3 aus dem Niederhalter 2 herausgenommen. Der Niederhalter 2 wird beispielsweise auf einer bereits hergestellten Geschossdecke 21 eines zu errichtenden Gebäudes festgelegt, indem beispielsweise eine Schraube durch das Loch 6 im Boden 5 des Niederhalters 2 gesteckt und in einen in die Geschossdecke 21 einbetonierten Anker geschraubt wird. Anschließend wird das Schließteil 3 von oben zwischen die Seitenwände 4 in den U-förmigen Niederhalter 2 eingesetzt, wobei der die Spindel 10 bildende Dywidag-Stab in den Schlitz im Quersteg 12 des Niederhalters 2 gelangt, wodurch der Gewindetrieb, den die Spindel 10 mit dem Schlitz des Querstegs 12 bildet, funktionsbereit ist. Das heißt, der Antrieb des Schiebeteils 3 ist funktionsbereit, durch Drehen der Spindel 10 am Sechskant 11 lässt sich das Schiebeteil 3 im Niederhalter 2 und damit auf der Geschossdecke 21 verschieben.

Als Abhebesicherung werden die beiden Stifte 7 durch die Löcher in den Seitenwänden 4 des Niederhalters 2 gesteckt und mit den nicht gezeichneten Splinten gesichert. Das Gleitlager 13 an der Unterseite des Schiebeteils 3 liegt verschiebbar auf der Geschossdecke 21 auf und stützt das Schiebeteil 3 nahe eines Randes der Geschossdecke 21 auf der Geschossdecke 21 ab.

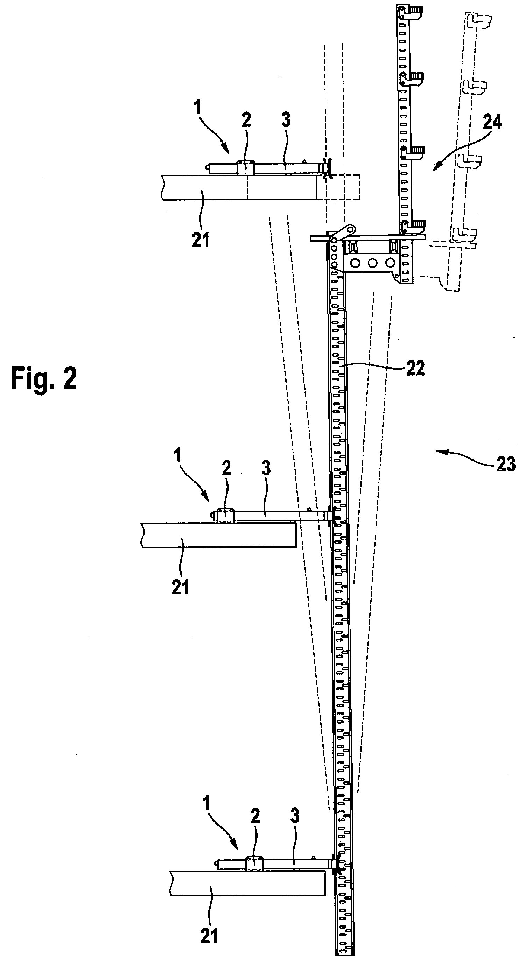

Nach Herausziehen des Federstifts 20 lassen sich die inneren Führungsbacken 15 des Führungsschuhs 14 verschieben und von den äußeren Führungsbacken 16 entfernen, so dass eine Führungsschiene 22 eines Klettersystems 23 (Figur 2) zwischen die Führungsbacken 15, 16 des Führungsschuhs 14 einführbar ist. Das Klettersystem 23 weist zwei oder mehr Führungsschienen 22 auf, die einer Ebene parallel zueinander nebeneinander angeordnet sind. Die Führungsschienen 22 verlaufen vertikal und es ist jede Führungsschiene 22 stets in mindestens zwei Führungsschuhen 14 gehalten und vertikal verschiebbar beigeführt, die mit erfindungsgemäßen Halterungen 1 an Geschossdecken 21 übereinander befestigt sind. Die Führungsschienen 22 tragen beispielsweise eine Arbeitsbühne 24 und/oder eine nicht dargestellte Kletterschalung. Im Ausführungsbeispiel sind die Führungsschienen 22 Doppel-T-Träger, deren dem Führungsschuh 14 zugewandte Flansche zwischen den Führungsbacken 15, 16 des Führungsschuhs 14 verschiebbar geführt sind.

Das Entfernen der Führungsbacken 15, 16 voneinander, das auch als Öffnen des Führungsschuhs 14 aufgefasst werden kann, erleichtert das Einführen der Führungsschienen 22 in die Führungsschuhe 14 und ermöglicht ein Einführen der Führungsschienen 22 in die Führungsschuhe 14 von oben, weil es die Auflager 19 für die nicht gezeichneten Sperrklinken der Absturzsperre des Klettersystems 23 außer Funktion setzt. Wenn die Führungsschienen 22 in die Führungsschuhe 14 eingeführt sind, werden die inneren Führungsbacken 15 wieder zu den äußeren Führungsbacken 16 geschoben, bis der Federstift 20 einschnappt. Die Führungsschienen 22 sind jetzt zwischen den Führungsbacken 15, 16 der Führungsschuhe 14 horizontal in allen Richtungen gehalten und vertikal verschieblich geführt. Außerdem sind die Absturzsperren mit den nicht gezeichneten Sperrklinken an den Führungsschienen 22 und den Auflagern 19 an den Schiebern 18 in den Schiebeteilen 3 in Funktion.

Zum Klettern, d. h. zum vertikalen Verschieben nach oben, wird das Klettersystem 23 mit nicht dargestellten Hydraulikzylindern angehoben, die sich an den Halterungen 1 abstützen. Dabei gelangen die Führungsschienen 22 in einen weiteren Führungsschuh 14, der mit einer Halterung 1 auf einer neu erstellten Geschossdecke 21 befestigt ist, bevor die Führungsschienen 22 aus einem Führungsschuh 14 an ihren unteren Enden austreten, so dass jede Führungsschiene 22 stets in mindestens zwei Führungsschuhen 14 übereinander geführt ist. Durch Drehen der Spindeln 10 lassen sich die Schiebeteile 3 verschieben, so dass die Führungsschuhe 14 miteinander fluchten. Außerdem ist mit dem Spindeltrieb 10, 12 ein Neigen des Klettersystems 23 und damit ein schräges Klettern möglich, um beispielsweise vor- und rückspringende Geschossdecken 21 auszugleichen. Die Schrägstellung des Klettersystems 23 ist in Figur 2 mit Strichlinien dargestellt. Voraussetzung für das Neigen des Klettersystems 23 und das Schrägklettern ist auch die Schwenkbarkeit der Führungsschienen 22 zwischen den Führungsbacken 15, 16 der Führungsschuhe 14. Die Gewindetriebe 10, 12 der Halterungen 1 sind selbsthemmend, die Schiebeteile 3 bewegen sich nicht, wenn die Spindeln 10 nicht gedreht werden, so dass sich die Schiebeteile 3 nicht unbeabsichtigt bewegen.

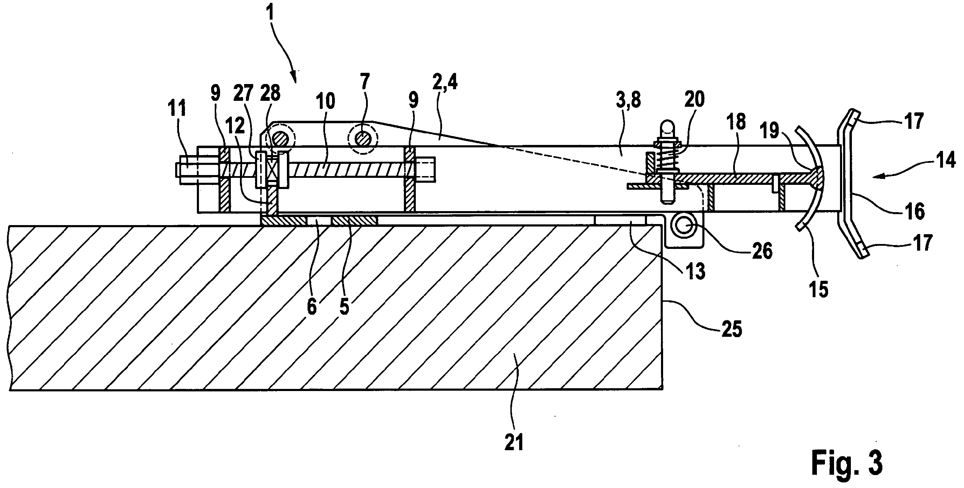

Figur 3 zeigt eine gegenüber Figur 1 abgewandelte Ausführungsform einer erfindungsgemäßen Halterung 1. Für gleiche Bauteile werden in Figur 3 mit Figur 1 übereinstimmende Bezugszahlen verwendet. Bei der Halterung 1 aus Figur 3 ist der Niederhalter 2 in Stirnansicht ebenfalls U-förmig und nimmt das Schiebeteil 3, das auch als Tragarm aufgefasst werden kann, in seiner Längsrichtung verschieblich auf. Durch Löcher in den Seitenwänden 4 des Niederhalters 2 durchgesteckte Stifte 7 sichern das Schiebeteil 3 gegen Abheben und verbinden das Schiebeteil 3 wie zu Figur 1 beschrieben werkzeuglos lösbar und zusammensetzbar mit dem Niederhalter 2. In Figur 3 ist der Niederhalter 2 länger, er reicht bis zu einem Rand 25 einer Geschossdecke 21, auf der der Niederhalter 2 mit einem Dübel oder einem Anker festgelegt ist. Der Niederhalter 2 aus Figur 3 steht ein kurzes Stück über den Rand 25 der Geschossdecke 21 über und weist dort eine Rolle 26 auf, auf der das Schiebeteil 3 aufliegt, so dass es im Bereich des Randes 25 der Geschossdecke 21 wälzgelagert ist.

Der Antrieb zum Verschieben des Schiebeteils 3 gegenüber dem Niederhalter 2 ist in Figur 3 wie in Figur 1 ein Gewindetrieb, d. h. ein selbsthemmendes Rotations-/Translations-Umsetzungsgetriebe, das gegenüber Figur 1 modifiziert ist. Anstelle eines Dywidag-Stabs weist der Antrieb in Figur 3 eine Spindel 10 mit einem herkömmlichen Bewegungsgewinde mit beispielsweise einem Rechteck- oder Trapezprofil auf, die in Löchern in Querstegen 9 des Schiebeteils 3 drehbar gelagert und axial gehalten ist. Zum Drehantrieb weist die Spindel 10 einen Sechskant 11 auf.

Auf der Spindel 10 ist eine Mutter 27 angeordnet, die eine umlaufende Nut 28 mit einem quadratischen Nutgrund-Querschnitt aufweist. Mit ihrer Nut 28 ist die Mutter 27 in einem oben offenen Schlitz in einem Quersteg 12 des Niederhalters 2 aufgenommen, wobei durch den quadratischen Querschnitt des Nutgrundes ein Formschluss mit dem Schlitz im Quersteg 12 besteht, der die Mutter 27 drehfest hält. In Längsrichtung des Schiebeteils 3, die zugleich eine axiale Richtung der Mutter 27 und der Spindel 10 ist, ist die Mutter 27 durch Anlage ihrer Nutwangen am Quersteg 12 des Niederhalters 2 axial gehalten, so dass durch Drehung der Spindel 10 das Schiebeteil 3 verschoben wird, wie es auch in Figur 1 der Fall ist. Der Gewindetrieb mit der Spindel 10 und der Mutter 27 ist wie gesagt selbsthemmend, so dass sich das Schiebeteil 3 nicht ohne Drehung der Spindel 10 verschieben lässt. Beim werkzeuglosen Zusammensetzen des Schiebeteils 3 und des Niederhalters 2 durch Einsetzen des Schiebeteils 3 von oben in den auf der Geschossdecke 21 festgelegten Niederhalter 2 gelangt die umlaufenden Nut 28 der Mutter 27 in den Schlitz des Querstegs 12 des Niederhalters 2, so dass wie in Figur 1 der Gewindetrieb durch das Zusammensetzen des Schiebeteils 3 und des Niederhalters 2 in Funktion gesetzt wird. Der Formschluss gegen Drehen der Mutter 27 ist auch in anderer Weise als mit einem im Querschnitt quadratischen Nutgrund möglich, beispielsweise mit einem Sechskant oder zwei Parallelflächen. Denkbar ist beispielsweise auch ein dreiecksförmiger Nutgrund, der in einen V-förmigen Schlitz im Quersteg 12 eingreift (nicht dargestellt). Im Übrigen funktionieren die Halterungen in Figuren 1 und in 3 in gleicher Weise und es werden. ergänzend zur Erläuterung der Figur 3 die Erläuterungen der Figuren 1 und 2 in Bezug genommen.

## Patentansprüche

1. Halterung für einen Führungsschuh (14) eines Klettersystems (23) für Betonschalungen, wobei die Halterung (1) einen Niederhalter (2), der auf einer Geschossdecke (21) festlegbar ist, ein Schiebeteil (3), das an dem Niederhalter (2) parallel zur Geschossdecke (21) verschiebbar geführt ist, und einen Antrieb (10, 27), mit dem das Schiebeteil (3) gegenüber dem Niederhalter (2) verschiebbar ist, aufweist, wobei der Niederhalter (2) und das Schiebeteil (3) werkzeuglos zusammensetzbar und voneinander lösbar sind, auch wenn der Niederhalter (2) auf einer Geschossdecke (21) festgelegt ist, dadurch gekennzeichent, daß der Antrieb (10,27) Selbsthemmend ist und dass mit dem Zusammensetzen des Schiebeteils (3) und des Niederhalters (2) der Antrieb (10, 27) in eine Funktionsstellung verbracht wird, ohne dass es eines weiteren Handgriffs außer dem Zusammensetzen des Schiebeteils (3) und des Niederhalters (2) bedarf.

2. Halterung nach Anspruch 1, **dadurch gekennzeichnet, dass** der Antrieb (10, 27) ein selbsthemmendes Getriebe, insbesondere ein selbsthemmendes Rotations-/Translations-Umsetzungsgetriebe aufweist,

3. Halterung nach Anspruch 2, **dadurch gekennzeichnet, dass** der Antrieb (10, 27) einen Gewindetrieb aufweist.

4. Halterung nach Anspruch 1, **dadurch gekennzeichnet, dass** die Halterung (1) eine lösbare Lösesicherung (7) aufweist, die bei zusammengesetzter Halterung (1) das Schiebeteil (3) gegen Lösen vom Niederhalter (2) sichert.

5. Halterung nach einem der vorhergehenden Ansprüche, **dadurch gekennzeichnet, dass** das Schiebeteil (3) ein Auflager (19) für eine Absturzsperre des Klettersystems (23) aufweist.

6. Halterung nach Anspruch 5, **dadurch gekennzeichnet, dass** das Auflager (19) eine zumindest teilzylindrische Auflagerfläche für die Absturzsperre des Klettersystems (23) aufweist.

7. Halterung nach einem der vorhergehenden Ansprüche, **dadurch gekennzeichnet, dass** das Schiebeteil (3) einen Führungsschuh (14) mit Führungsbacken (15, 16) zu einer vertikal verschieblichen Führung einer vertikalen Führungsschiene (22) eines Klettersystems (23) für Betonschalungen zwischen den Führungsbacken (15, 16) aufweist, und dass die Führungsbacken (15, 16) voneinander entfernbar sind.

8. Halterung nach Ansprüchen 5 bis 7, **dadurch gekennzeichnet, dass** das Auflager (19) für die Absturzsperre des Klettersystems (23) durch Entfernen der Führungsbacken (15, 16) des Führungsschuhs (14) voneinander außer Funktion setzbar ist.

## Claims

1. Holder for a guide shoe (14) of a climbing system (23) for concrete formwork, wherein the holder (1) has a hold-down (2), which can be fastened to a floor (21), a slide part (3), which is movably guided in the hold-down (2), parallel to the floor (21), and a drive (10, 27) by means of which the slide part (3) can be moved relative to the hold-down (2), wherein the hold-down (2) and the slide part (3) can be assembled and detached from one another without the use of a tool, even when the hold-down (2) is secured on a floor (21), **characterized in that** the drive (10, 27) is self-locking and that by the assembly of the slide part (3) and of the hold-down (2), the drive (10, 27) is brought into an operating position, without the need of an additional manipulation except for the assembly of the slide part (3) and of the hold-down (2).

2. Holder according to Claim 1, **characterized in that** the drive (10, 27) has a self-locking transmission, in particular a rotation/translation conversion transmission.

3. Holder according to Claim 2, **characterized in that** the drive (10, 27) has a threaded drive.

4. Holder according to Claim 1, **characterized in that** the holder (1) has a detachable release safeguard (7) which, in the case of the assembled holder (1), secures the slide part (3) against detachment from the hold-down (2).

5. Holder according to any one of the preceding claims, **characterized in that** the slide part (3) has a support (19) for an anti-fall lock of the climbing system (23).

6. Holder according to Claim 5, **characterized in that** the support (19) has an at least partially cylindrical bearing surface for the anti-fall lock of the climbing system (23).

7. Holder according to any one of the preceding claims, **characterized in that** the slide part (3) has a guide shoe (14) with guide jaws (15, 16) for a vertically movable guiding of a vertical guide rail (22) of a climbing system (23) for concrete formwork between the guide jaws (15, 16), and **in that** the guide jaws (15, 16) can be moved apart from one another.

8. Holder according to Claims 5 to 7, **characterized in that** the support (19) for the anti-fall lock of the climbing system (23) can be put out of operation by moving the guide jaws (15, 16) of the guide shoe (14) away from one another.

## Revendications

1. Support pour un sabot de guidage (14) d'un système grimpant (23) pour des coffrages de béton, sachant que le support (1) présente un serre-flan (2) qui peut être fixé à un plafond (21), un élément coulissant (3) qui est guidé en déplacement sur le serre-flan (2) parallèlement au plafond (21), et un entraînement (10, 27) permettant de déplacer l'élément coulissant (3) par rapport au serre-flan (2), sachant que le serre-flan (2) et l'élément coulissant (3) peuvent être réunis et détachés l'un de l'autre sans outil même lorsque le serre-flan (2) est fixé à un plafond (21), **caractérisé en ce que** l'entraînement (10, 27) est autobloquant, et **en ce que** la réunion de l'élément coulissant (3) et du serre-flan (2) amène l'entraînement (10, 27) dans une position fonctionnelle sans que cela nécessite une autre manipulation que la réunion de l'élément coulissant (3) et du serre-flan (2).

2. Support selon la revendication 1, **caractérisé en ce que** l'entraînement (10, 27) présente une transmission autobloquante, en particulier une transmission autobloquante de conversion rotation/translation.

3. Support selon la revendication 2, **caractérisé en ce que** l'entraînement (10, 27) présente un mécanisme à vis.

4. Support selon la revendication 1, **caractérisé en ce que** le support (1) présente une sécurité libérable (7) contre le détachement qui, lorsque le support (1) est assemblé, empêche l'élément coulissant (3) de se détacher du serre-flan (2).

5. Support selon l'une des revendications précédentes, **caractérisé en ce que** l'élément coulissant (3) présente un appui (19) pour un verrouillage antichute du système grimpant (23).

6. Support selon la revendication 5, **caractérisé en ce que** l'appui (19) présente une surface d'appui au moins partiellement cylindrique pour le verrouillage antichute du système grimpant (23).

7. Support selon l'une des revendications précédentes, **caractérisé en ce que** l'élément coulissant (3) présente un sabot de guidage (14) avec des mâchoires de guidage (15, 16) pour un guidage verticalement mobile d'un rail de guidage vertical (22) d'un système grimpant (23) pour des coffrages de béton entre les mâchoires de guidage (15, 16), et **en ce que** les mâchoires de guidage (15, 16) peuvent être éloignées l'une de l'autre.

8. Support selon les revendications 5 à 7, **caractérisé en ce que** l'appui (19) pour le verrouillage antichute du système grimpant (23) peut être mis hors fonction en éloignant l'une de l'autre les mâchoires de guidage (15, 16) du sabot de guidage (14).
